# EUROPÄISCHE PATENTSCHRIFT

(11) **EP 0 827 474 B1**
(45) Veröffentlichungstag und Bekanntmachung des Hinweises auf die Patenterteilung: **27.01.1999**
(21) Anmeldenummer: 96915948.2
(22) Anmeldetag: 17.05.1996
(51) Int. Cl.: B62L 1/14

(54) **FELGENBREMSE**
RIM BRAKE
FREIN SUR JANTE

(30) Priorität: 16.05.1995 DE 19517413
(43) Veröffentlichungstag der Anmeldung: 11.03.1998
(73) Patentinhaber: Wendler Innovations GMBH, 47057 Duisburg (DE)
(72) Erfinder: WENDLER, Jochen, D-71573 Allmersbach (DE)
(74) Vertreter: Schuster, Gregor
(86) Internationale Anmeldenummer: DE9600866
(87) Internationale Veröffentlichungsnummer: WO9636526

(56) Entgegenhaltungen:
- DE-C- 651 978
- FR-A- 969 011
- US-A- 5 060 534

## Beschreibung

Die Erfindung geht aus von einer Felgenbremse nach der Gattung des Hauptanspruchs.

Bei einer bekannten Felgenbremse der gattungsgemäßen Art (DE-OS 42 17 958) führt das Seil des Bremszugs zu einer der beiden Bremsbügel und zwar über eine Rolle geführt, deren Achse über ein Gabelstück und einem Seilstück mit dem anderen Bremsbügel verbunden ist. Beim Anziehen des Seilzuges wird zum Verschwenken des mit dem Seilzug verbundenen Bremsbügels der Seilzug ein Stück mit der Rolle bewegt, wobei das zwischen Rollenauflage und Bremsbügel gelegene Stück verkürzt wird. Der von der Rolle zum anderen Bremsbügel unveränderte Abstand bewirkt damit eine gewisse Verschiebung der Rollenachse und damit des Kraftzentrums dieser Aufteileinrichtung. Durch die Art der Anlenkung und Umlenkung der Kräfte besteht ein System, das sich asymmetrisch verschiebt, d.h. je nach Schwenkbereich der Bremsbügel wandert die Achse der Rolle von dem einen Bremsbügel mehr zum anderen. Da das Zugseil zur Wegübertragung geführt sein muß, beispielsweise durch ein Mantelrohr, sind zusätzliche Abstützungen notwendig, beispielsweise am Ende des Mantelrohrs, so daß durch die Lageänderung der Rolle eine Verrenkung des zur Rolle führenden Abschnitts des Bremszuges stattfindet, welche einen zusätzlichen Einfluß auf die sich einstellende Lage der Rolle hat. Bei dieser bekannten Felgenbremse wirken sich die Zugkräfte des Zugseiles auch als solche auf die Schwenklager der Bremsbügel aus, was sich grundsätzlich nachteilig, also zu Lasten der reinen Verstellkräfte für die Schwenkbewegung der Bremsbügel auswirkt.

Bei einer anderen bekannten Felgenbremse (EP-OS 0 469 576) wird zwar die Achse einer Zwischenrolle am Rahmen fixiert, es wird jedoch ebenfalls nur einer der beiden Bremsbügel vom Bremszug betätigt, wobei die Tülle am Ende des den Seilzug aufnehmenden Rohres über ein über die Rolle geführtes Seil mit dem anderern Bremsbügel verbunden ist. Hierdurch entsteht der Nachteil, daß erst nach Betätigen des einen Bremsbügels und des dabei auftretenden Widerstandes, das Ende des Bremszuges einschließlich Tülle in Richtung Bremsbügel verschoben wird, wodurch über die Seilverbindung zum anderen Bremsbügel dieser in Richtung Bremswirkung mitgenommen wird. Abgesehen davon, daß aufgrund der auftretenden Reibungskräfte und Verschiebungswiderstände, die auf die Felgen wirkenden Kräfte der beiden Bremsklötze unterschiedlich sind, wird von Anfang an die Felge einseitig durch den zuerst betätigten Bremsklotz belastet.

Bei einer weiteren bekannten Felgenbremse (DE-OS 31 41 004) dient als Aufteileinrichtung eine Tragplatte, die durch den Seilzug für den Bremsvorgang mitgenommen wird und von der zwei Anlenkbügel jeweils zu einem Bremsbügel führen. Zwar besteht hier eine gleichmäßige Aufteilung des Weges und der Kräfte, bei der Verschiebung der Tragplatte auf die beiden Bremsbügel, allerdings zu Lasten der Hebelwirkung, da mit zunehmendem Verstellweg der Tragplatte, d.h. mit zunehmendem Schwenkweg der Bremsbügel die Stellkräfte abnehmen, da die Winkel zwischen den beiden Übertragungshebeln abnehmen und damit auch die wirksame Verstellkraft in diesem Kräftedreieck. Nicht zuletzt wirkt sich auch hier die Zugkraft des Bremszuges auf die Schwenkachse der Bremsbügel aus, was zu der oben genannten zusätzlichen Belastung in der falschen Richtung führt.

Bei einer weiteren bekannten Felgenbremse (FR-PS 969.011) dient als Aufteileinrichtung ein Bügel, der ein Kupplungsteil führt und gleichzeitig als Widerlager für das Mantelrohr des Bremszugs dient. Das Kupplungsteil verbindet das Zugseil des Bremszugs und das die Bremsbacken verbindende Seil. Dabei findet keine Umsetzung der vom Bremszug übertragenen Stellkraft statt.

Die erfindungsgemäße Felgenbremse mit den kennzeichnenden Merkmalen des Hauptanspruchs hat demgegenüber den Vorteil, daß die Kräfteaufteilung innerhalb des Umsetzbügels erfolgt, ohne zusätzliche Belastung der Achsen oder Lager der Bremsbügel und ohne eine einseitige Verschiebung der Einrichtung. Außerdem werden die Bremsklötze gleichmäßig an die beiden Felgenseiten gepreßt, da die Aufteileinrichtung sich problemlos der Felgenlage anpassen kann. Ein ganz wichtiger Vorteil der Erfindung besteht darin, daß beim Betätigen des Bremszuges keine Veränderung der tatsächlichen Bremskräfte stattfindet, zumindest keine Abnahme dieser Kräfte.

Nach einer vorteilhaften Ausgestaltung der Erfindung, dienen als Umsetzlager Rollen. Natürlich könnte es sich auch um statische Lager, wie Gleitlager, insbesondere Kunststofflager für die Führung der Seile handeln.

Nach einer weiteren vorteilhaften Ausgestaltung der Erfindung verbindet nur ein Seil die beiden Bremsbügel, welches im mittleren Längenbereich an dem Kupplungsstück verklemmt ist. Durch Lockern der Verklemmung kann dadurch sehr einfach die Lage des Kupplungsstücks zu den beiden Bremsbügeln justiert werden, da auch die Befestigungsstellen des Seiles an den Bremsbügeln entweder so sein kann, daß das Seil an einem der Bremsbügel über einen Kopf einhängbar ist und am anderen Bremsbügel verklemmt ist, oder daß für die Grundjustierung das Seil erst einmal an den beiden Bremsbügeln verklemmt wird und danach die Justierung des Kupplungsteils erfolgt.

Nach einer weiteren vorteilhaften Ausgestaltung der Erfindung ist der Umsetzbügel als Dreiecksrahmen ausgebildet, in dessen Innenausnehmung das Kupplungsteil angeordnet ist, wobei der Anschluß des Bremszuges an einer der Ecken und die beiden Umsetzlager an den anderen beiden Ecken des Dreieckrahmens gelegen sind. Da der Bremszug unmittelbar bis zum Dreiecksrahmen führt, stützt sich das Mantelrohr an diesem Dreiecksrahmen ab, während das Zugseil zum Kupplungsstück weitergeführt wird. Die beim Verschieben des Zugseiles am Mantelrohr auftretenden Stützkräfte werden somit unmittelbar auf den Dreiecksrahmen übertragen, so daß die ganze Verstellkraftumsetzung innerhalb dieses Dreiecksrahmens erfolgt.

Nach einer weiteren vorteilhaften Ausgestaltung der Erfindung ist mindestens der letzte Abschnitt des Bremszuges zum Umsatzbügel hin als in einem Rohr geführtes Zugseil ausgebildet. Erfindungsgemäß kann nämlich der Umsetzbügel auch am Fahrradrahmen befestigt sein, so daß das Zugseil oder beispielsweise eine Hydraulikeinrichtung zur Verstellung gewählt wird, wobei keine Kräfte auf den Umsetzbügel auftreten.

Nach einer weiteren vorteilhaften Ausgestaltung der Erfindung ist der Umsetzbügel frei angeordnet und in Richtung Bremszug hubfixiert, wobei er an dem Hubrohr des Zugseiles aufgehängt ist. Hierfür ist allerdings erforderlich, daß nach einer weiteren Ausgestaltung der Erfindung zur Hubfixierung eine Fixierung (Traglasche) des Bremszuges zum Fahrrad hin erfolgt.

Nach einer weiteren vorteilhaften Ausgestaltung der Erfindung ist der Bremszug ein aus Zugseil und Mantelrohr bestehender Seilzug, so daß die Stellwegübertragung einfach und kostengünstig ist.

Nach einer weiteren vorteilhaften Ausgestaltung der Erfindung ist der Bremszug eine mit Hydraulikflüssigkeit gefüllte Hydraulikleitung, so daß eine reibungsarme Stellwegübertragung gewährleistet ist.

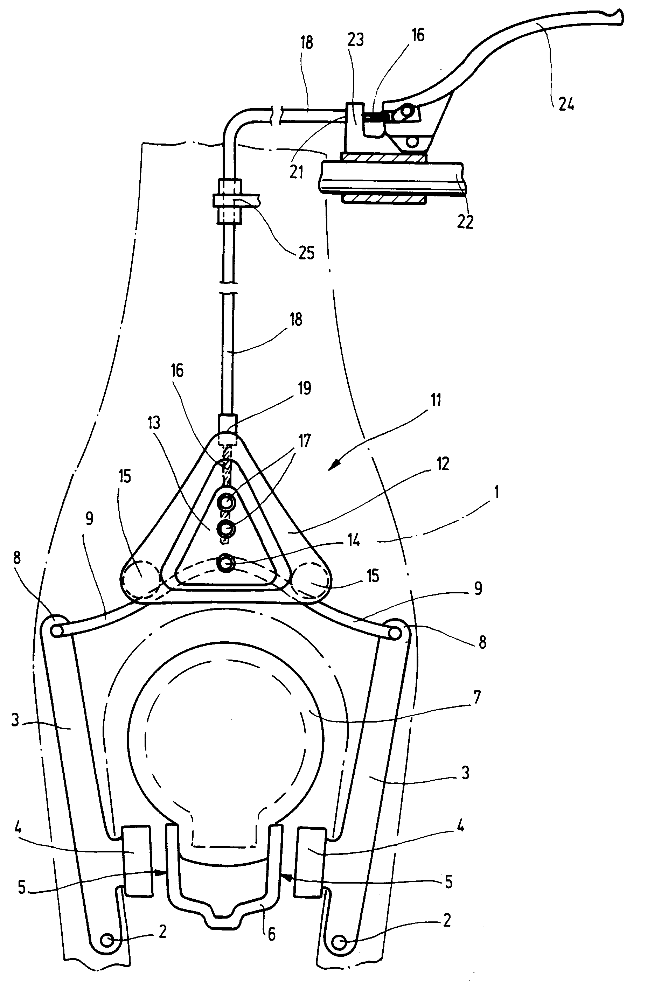

Weitere Vorteile und vorteilhafte Ausgestaltungen der Erfindung sind in der nachfolgenden Beschreibung, der Zeichnung und den Ansprüchen entnehmbar.

Ein Ausführungsbeispiel des Gegenstandes der Erfindung ist stark vereinfacht in der Zeichnung dargestellt.

An einem nur angedeuteten Fahrradrahmen 1 sind auf Schwenkachsen 2 Bremsbügel 3 schwenkbar gelagert, an denen Bremsklötze 4 angeordnet sind, die mit den Reibflächen 5 einer Felge 6 zusammenwirken, auf der ein Radreifen 7 angeordnet ist.

Die den Schwenkachsen 2 abgewandten Enden 8 der Bremsbügel 3 sind durch ein Seil 9 miteinander verbunden. Das Seil 9 ist über einen Verstellkraftumsetzer 11 geführt, der einen Dreiecksrahmen 12 aufweist und ein in der Innenausnehmung desselben angeordnetes Kupplungsteil 13, durch welches das Seil 9 geführt ist und über eine Klemmschraube 14 befestigt ist. An den unteren beiden Ecken des Dreiecksrahmens 12 sind Umlenkrollen 15 angeordnet, über die das Seil 9 geführt ist.

Das Kupplungsteil 13 ist außerdem mit einem von oben zugeführten Zugseil 16 verbunden. Das Zugseil 16 ist dabei über Klemmschrauben 17 am Kupplungsteil 13 befestigt. Außerdem ist das Zugseil 16 in einem Mantelrohr 18 geführt, dessen eines Ende 19 sich an der oberen Ecke des Dreiecksrahmens 12 abstützt und dessen anderes Ende 21 sich an einem an einer nur angedeuteten Lenkstange 22 angeordneten Träger 23 eines Bremshebels 24 abstützt. Das Mantelrohr 18 ist außerdem nahe dem Dreiecksrahmen 12 über eine Trägerlasche 25 mit dem Fahrradrahmen verbunden, um dadurch eine flexible Halterung des Verstellkraftumsetzers 11 zu erzielen. Hierdurch wird vermieden, daß bei Betätigung des Zugseils 16 der Dreieckrahmen 12 nach oben gezogen wird.

Die erfindungsgemäße Felgenbremse arbeitet wie folgt: Sobald durch den Bremshebel 24 das Seil 16 und damit das Kupplungsteil 13 innerhalb des Dreiecksrahmens 12 nach oben gezogen wird, wird das Seil 9 über die Rollen 15 mitgezogen und die Bremsbügel 3 gegeneinander verschwenkt, so daß die Bremsklötze 4 auf die Reibflächen 5 der Felge 6 gelangen. Aufgrund der Umsetzung über die Rollen 15 und deren unveränderte Lage während des Bremsvorgangs, ergibt sich im Bereich dieses Verstellkraftumsetzers 11 keine nach außen sich auswirkende Kraftänderung. Die Umlenkstelle des Seiles 19 an den Rollen 15 bleibt konstant. Je nach Lage des Verstellkraftumsetzers 11 in bezug auf die oberen Enden 8 der Bremsbügel 3, kann sogar eine gewisse Verbesserung der an den Bremsbügeln 3 über das Seil 9 angreifenden Zugkräfte entstehen.

Alle in der Beschreibung, den nachfolgenden Ansprüchen und in der Zeichnung dargestellten Merkmale können sowohl einzeln als auch in beliebiger Kombination miteinander erfindungswesentlich sein.

### Bezugszahlenliste

- 1: Fahrradrahmen
- 2: Schwenkachsen
- 3: Bremsbügel
- 4: Bremsklötze
- 5: Reibflächen
- 6: Felge
- 7: Radreifen
- 8: Enden
- 9: Seil
- 10:
- 11: Verstellkraftumsetzer
- 12: Dreiecksrahmen
- 13: Kupplungsteil
- 14: Klemmschraube
- 15: Umlenkrolle
- 16: Zugseil
- 17: Klemmschraube
- 18: Mantelrohr
- 19: Ende von 18
- 20:
- 21: Ende von 18
- 22: Lenkstange
- 23: Träger
- 24: Bremshebel
- 25: Trägerlasche

## Patentansprüche

1. Felgenbremse
- mit zwei mindestens mittelbar am Fahrzeugrahmen (1) schwenkbar gelagerten und über Bremsklötze (4) an der Radfelge (6) angreifenden Bremsbügeln (3),
- mit von einem willkürlich betätigbaren Bremshebel (24) oder dergleichen einen Stellweg zur Felgenbremse hin übertragenden Bremszug (16, 18),
- mit einer zwischen Bremszug (16, 18) und Bremsbügeln (3) vorhandenen, aus einem Führungsteil (12) und einem Kupplungsteil (13) bestehenden Aufteileinrichtung (11), wobei vom Kupplungsteil (13) je ein Seil (9) oder dergleichen bestimmter Länge zu je einem der Bremsbügel (3) führt und das Kupplungsteil (13) den Stellweg auf beide Bremsbügel (3) überträgt, dadurch gekennzeichnet,
- daß die Aufteileinrichtung (11) als Verstellkraftumsetzer ausgebildet ist,
- daß das Seil (9) oder dergleichen über ein, der Umlenkung desselben dienendes Umsetzlager (15) geführt ist,
- daß die Umsetzlager (15) am, der Verstellkraftumsetzung dienenden Umsetzbügel (12) angeordnet sind,
- daß das Kupplungsteil (13) bezüglich des Umsetzbügels (12) pendelnd angeordnet ist und,
- daß die Aufteileinrichtung (11) mindestens mittelbar bezüglich des Fahrradrahmens (1) hubfixiert ist.

2. Felgenbremse nach Anspruch 1, dadurch gekennzeichnet, daß als Umsetzlager Umlenkrollen (15) dienen.

3. Felgenbremse nach Anspruch 1 oder 2, dadurch gekennzeichnet, daß als Seil oder dergleichen ein einstückiges Seil (9) dient, über das die Bremsbügel (3) miteinander verbunden sind und welches im mittleren Längenbereich am Kupplungsteil (13) festklemmbar ist.

4. Felgenbremse nach einem der vorhergehenden Ansprüche, dadurch gekennzeichnet, daß der Umsetzbügel als Dreiecksrahmen (12) ausgebildet ist, in dessen Innenausnehmung das Kupplungsteil (13) angeordnet ist, wobei der Anschluß des Bremszuges (16, 18) an einer der Ecken und die beiden Umsetzlager (15) an den anderen beiden Ecken des Dreiecksrahmens (12) gelegen sind.

5. Felgenbremse nach einem der vorhergehenden Ansprüche, dadurch gekennzeichnet, daß mindestens der letzte Abschnitt des Bremszuges (16, 18) zum Umsetzbügel (12) hin als in einem Rohr (18) geführtes Zugseil (16) ausgebildet ist.

6. Felgenbremse nach einem der vorhergehenden Ansprüche, dadurch gekennzeichnet, daß der Umsetzbügel (12) in Richtung Bremszug (18) am Fahrrad (1) hubfixiert ist.

7. Felgenbremse nach Anspruch 6, dadurch gekennzeichnet, daß zur Hubfixierung eine am Fahrrad angeordnete Traglasche (25) oder dergleichen des Bremszuges (18) dient.

8. Felgenbremse nach einem der vorhergehenden Ansprüche, dadurch gekennzeichnet, daß der Bremszug ein aus Zugseil (16) und Mantelrohr (18) bestehender Seilzug ist.

9. Felgenbremse nach einem der vorhergehenden Ansprüche, dadurch gekennzeichnet, daß der Bremszug eine mit Hydraulikflüssigkeit gefüllte Hydraulikleitung ist.

## Claims

1. Rim brake
- with two brake clamps (3) which are at least indirectly mounted in a pivoted fashion to the bicycle frame (1) and which engage the wheel rim (6) via brake shoes (4),
- with a brake puller (16, 18) driven by an arbitrarily operated brake lever (24) or the like to transfer a control path to the rim brake,
- with a branching device (11) disposed between the brake puller (16, 18) and brake clamps (3) comprising a guide member (12) and a coupling member (13), wherein a cable (9) or the like having a certain length leads from the coupling member (13) to each brake clamp (3) and the coupling member (13) transmits the control path to both brake clamps (3)
characterized in that,
- the branching device (11) is configured as an adjustment force converter,
- the cable (9) or the like is guided via a deflection bearing (15) for deflecting same,
- the deflection bearing (15) is disposed on a conversion clamp (12) serving as an adjustment force converter,
- the coupling member (13) is disposed in the manner of a pendulum relative to the conversion clamp (12) and
- the branching device (11) is fixed with respect to displacement at least indirectly relative to the bicycle frame (1).

2. Rim brake of claim 1, characterized in that deflection rollers (15) serve as the deflection bearing.

3. Rim brake according to claim 1 or 2, characterized in that, a cable (9), fashioned out of a single length, serves as the cable or the like by means of which the brake clamps (3) are connected to each other and which can be firmly clamped to the coupling member (13) in its middle length region.

4. Rim brake according to any one of the preceding claims, characterized in that the conversion clamp is configured as a triangular frame (12) within the opening of which the coupling member (13) is disposed, wherein the connection of the brake puller (16, 18) is disposed at one of the corners and the two deflection bearings (15) are disposed on the other two corners of the triangular frame (12).

5. Rim brake according to any one of the preceding claims, characterized in that at least the last section of the brake puller (16, 18) facing the conversion clamp (12) is configured as a tensioning cable (16) guided within a tube (18).

6. Rim brake according to any one of the preceding claims, characterized in that the conversion clamp (12) is fixed on the bicycle (1) with respect to displacement in a direction towards the brake puller (18).

7. Rim brake according to claim 6, characterized in that a support bracket (25) or the like disposed on the bicycle serves to fix the brake puller (18) with respect to displacement.

8. Rim brake according to any one of the preceding claims, characterized in that the brake puller is a cable puller comprising a tension cable (16) and a cylindrical jacket (18).

9. Rim brake according to any one of the preceding claims, characterized in that the brake puller is an hydraulic conduit filled with hydraulic liquid.

## Revendications

1. Frein sur jante
- avec au moins deux arceaux de frein (3) indirectement logés pivotables sur le cadre (1) du vélo et attaquant la jante (6) au moyen de sabots de frein (4),
- avec un câble de frein (16, 18) transmettant vers le frein sur jante un parcours de réglage, à partir d'une poignée de frein (24) ou autres pouvant être actionnée à volonté,
- avec un dispositif répartition (11) disposé entre le câble de frein (16, 18) et les arceaux de frein (3) et composé d'un élément de guidage (12) et d'un élément de raccordement (13), un câble respectif (9) ou autres d'une certaine longueur conduisant depuis l'élément de raccordement (13) vers chacun des arceaux de frein (3), et l'élément de raccordement (13) transmettant le parcours de réglage sur les deux arceaux de frein (3),
caractérisé en ce que
- le dispositif de répartition (11) est conçu en tant que transmetteur de la force de réglage,
- le câble (9) ou autres passe par un palier de déviation (15) servant à le dévier,
- les paliers de déviation (15) sont disposés sur l'étrier de déviation (12) servant à dévier la force de réglage,
- l'élément de raccordement (13) est disposé de manière pendulaire par rapport à l'étrier de déviation (12),
- le dispositif de répartition (11) est au moins fixé indirectement contre un déplacement par rapport au cadre (1) du vélo.

2. Frein sur jante selon la revendication 1, caractérisé en ce que des poulies de déviation (15) servent de palier de déviation.

3. Frein sur jante selon la revendication 1 ou 2, caractérisé en ce qu'un câble en une seule pièce (9) sert de câble ou autres, par lequel les arceaux de frein (3) sont reliés entre eux, et lequel peut être fixé à mi-longueur à l'élément de raccordement (13).

4. Frein sur jante selon l'une des revendications précédantes, caractérisé en ce que l'étrier de déviation est conçu en tant que cadre triangulaire (12) dans l'évidement intérieur duquel est disposé l'élément de raccordement (13), le raccordement du câble de frein (16, 18) étant situé sur un angle et les deux paliers de déviation (15) étant situés sur les deux autres angles du cadre triangulaire (12).

5. Frein sur jante selon l'une des revendications précédantes, caractérisé en ce qu'au moins la dernière partie du câble de frein (16, 18), en direction de l'étrier de déviation (12), est conçue en tant que câble de traction (16) passant par un tube (18).

6. Frein sur jante selon l'une des revendications précédantes, caractérisé en ce que sur le vélo (1), l'étrier de déviation (12) est fixé contre un déplacement en direction du câble de frein (18).

7. Frein sur jante selon la revendication 6, caractérisé en ce qu'un collier de support (25) ou autres, disposé sur le vélo, sert à fixer le câble de frein (18) contre un déplacement.

8. Frein sur jante selon l'une des revendications précédantes, caractérisé en ce que le câble de frein est un câble sous gaine composé d'un câble de traction (16) et d'un tube enveloppant (18).

9. Frein sur jante selon l'une des revendications précédantes, caractérisé en ce que le câble de frein est une conduite hydraulique remplie de fluide hydraulique.
